# EUROPÄISCHE PATENTSCHRIFT

(11) **EP 2 826 902 B1**
(45) Veröffentlichungstag und Bekanntmachung des Hinweises auf die Patenterteilung: **26.12.2018**
(21) Anmeldenummer: 13177148.7
(22) Anmeldetag: 19.07.2013
(51) Int. Cl.: D04B 23/12, D04B 27/08

(54) **Verfahren zur Herstellung eines textilen Flächenheizelements und Kettenwirkmaschine oder Raschelmaschine mit einem Magazinschusseintragssystem**
Method for producing a textile planar heating element und warp knitting or Raschel machine with weft insertion system
Procédé de fabrication d'un élément de chauffage de surface textile et métier à tricoter chaîne ou métier Raschel avec un système d'insertion de trame

(43) Veröffentlichungstag der Anmeldung: 21.01.2015
(73) Patentinhaber: Kufner Holding GmbH, 81379 München (DE)
(72) Erfinder: Schumacher, Rolf, 72336 Balingen (DE)
(74) Vertreter: Ruckh, Rainer Gerhard

(56) Entgegenhaltungen:
- EP-A1- 2 014 811
- EP-B1- 1 815 717
- DE-C1- 19 816 440

## Beschreibung

Die Erfindung betrifft ein Verfahren zur Herstellung eines textilen Flächenheizelements und eine Kettenwirkmaschine oder Raschelmaschine mit einem Magazinschusseintragssystem.

Ein derartiges Verfahren ist aus der EP 1 815 717 B1 bekannt. Das dort beschriebene Verfahren dient insbesondere zur Herstellung von Flächenheizelementen, die für Sitzheizungen im Kraftfahrzeug-Bereich eingesetzt werden. Gemäß diesem Verfahren wird durch Wirken ein Grundmaterial, beispielsweise ein Vlies als so genanntes non-woven Material, mit einem Gewirk durchstochen.

In ein- und demselben Arbeitsgang werden durch Wirken zumindest teilweise als Kettfäden Heizleiter gelegt und in Abständen zueinander als Schussfäden oder Schussfadengruppen die Heizleiter berührende Kontaktleiter eingetragen, so dass die Heizleiter und Kontaktleiter integraler Bestandteil des Grundmaterials sind.

Ein Vorteil dieses Verfahrens besteht darin, dass die Heizleiter und Kontaktleiter in einem Arbeitsvorgang zusammen mit der Herstellung des Gewirks im Flächenheizelement integriert werden, so dass gegenüber bisher bekannten Verfahren, bei welchen die Kontaktleiter und Heizleiter in mehrstufigen Verfahren im Flächenheizelement integriert werden mussten, ein erheblicher Rationalisierungsvorteil bei der Herstellung der Flächenheizelemente erhalten wurde.

Die DE 198 16 440 C1 betrifft ein Verfahren zum Herstellen von Wirkware und eine Kettenwirkmaschine zur Realisierung des Verfahrens. Gemäß diesem Verfahren werden die Längsförderer der Kettenwirkmaschine zumindest teilweise intermittierend und/oder kontinuierlich mit zumindest zeitweise variierender Geschwindigkeit so gesteuert, dass die Schussfäden in den Bereichen der Wirknadeln mustergemäß zu beliebigen Zeitpunkten und nacheinander in beliebiger gewünschter Anzahl zugeführt werden, so dass ein bis zu unendlich langer frei wählbarer Schussfaden-Musterrapport erzielbar ist. Der Kettenwirkmaschine ist ein separates Gestell zugeordnet, das heißt unabhängig von der Kettenwirkmaschine, sind ein Schusseintragssystem mit Servomotorantrieb, ein dazugehöriger Schusswagen und Schusswagenführungen, Schussfaden-Versatzrechen mit Servomotorantrieb und Längsförderer mit Antrieb, sowie ein Längsförderrahmen angeordnet. Der Antrieb der Längsförderer erfolgt unabhängig vom Maschinenantrieb und ist rechnergesteuert, wobei die Längsförderer zumindest zwischen einzelnen Schussfäden eine zumindest teilweise intermittierende und/oder kontinuierliche, die Geschwindigkeit zumindest zeitweise variierende Bewegung ausführen können.

In der EP 2 014 811 A1 sind eine Kettenwirkmaschine und ein Verfahren zu ihrem Betrieb angeordnet. Die Kettenwirkmaschine weist eine von einem Hauptwellenantrieb angeriebene Hauptwelle, mindestens einen Folgeantrieb und eine Steuereinrichtung zur Ansteuerung des Folgeantriebs in Abhängigkeit von einer Leitachse auf. Weiterhin weist die Steuereinrichtung einen Leitachsengenerator zur Erzeugung einer virtuellen Leitachse auf.

Der Erfindung liegt die Aufgabe zugrunde, ein Verfahren der eingangs genannten Art bereitzustellen, welches eine weitere verbesserte, rationelle Herstellung von Flächenheizelementen mit hoher Funktionalität ermöglicht.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft ein Verfahren zum Herstellen eines textilen Flächenheizelements, wobei ein Gewirk gebildet wird und in ein- und demselben Arbeitsvorgang durch Wirken die Heizleiter als Kettfäden gelegt werden. In Abständen zueinander werden als Schussfäden oder Schussfadengruppen die Heizleiter berührende Kontaktleiter eingetragen. Zur Herstellung des Flächenheizelements wird eine Kettenwirkmaschine oder Raschelmaschine eingesetzt, deren Produktionsgeschwindigkeit abhängig von der Maschenbildung variiert wird. Die Kettenwirkmaschine oder Raschelmaschine weist ein Magazinschusseintragssystem mit Zuführketten zur Zuführung von Schussfäden auf. Zusätzlich werden sowohl die Zuführketten als auch der Schusswagen abhängig von der Maschenbildung für vorgegebene Zeiten synchron angehalten.

Die Erfindung betrifft weiterhin eine Kettenwirkmaschine oder Raschelmaschine mit einem Magazinschusseintragssystem.

Das Flächenheizelement zeichnet sich allgemein dadurch aus, dass bei diesem eine homogene Wärmeverteilung über die gesamte Fläche des Flächenheizelements erzielt wird, da die Heizleiter als Kettfäden eine Mehrfachanordnung von dicht nebeneinander liegenden Fäden im Gewirk ausbilden. Ein weiterer wesentlicher Vorteil besteht in dem geringen Energieverbrauch, der zur Beheizung mittels des erfindungsgemäßen Flächenheizelements benötigt wird.

Gemäß des erfindungsgemäßen Verfahrens wird die Produktionsgeschwindigkeit bei der Herstellung des Gewirks maschenabhängig variiert, wodurch die mittlere Produktionsgeschwindigkeit gegenüber einer konstanten Produktionsgeschwindigkeit erheblich gesteigert werden kann, was zu erheblichen Zeiteinsparungen und kürzeren Maschinenlaufzeiten bei der Herstellung des Flächenheizelements führt.

Der Erfindung liegt dabei die Erkenntnis zugrunde, dass die Komplexität zur Herstellung des Flächenheizelements über die einzelnen Maschen des Gewirks örtlich variiert. Dies beruht darauf, dass zum einen die Kontaktleiter nur lokal einzeln oder in Gruppen als Schussfäden eingelegt werden und die Struktur der Heizleiter im Bereich dieser Kontaktleiter komplexer ist als im Bereich zwischen den Kontaktleitern, insbesondere um einen möglichst guten Kontakt der Heizleiter mit den Kontaktleitern herzustellen. Diesem Umstand wird bei dem erfindungsgemäßen Verfahren dadurch Rechnung getragen, dass die Produktionsgeschwindigkeit in den Bereichen, wo das Gewirk eine komplexe Struktur aufweist zwar notgedrungen reduziert ist. Jedoch wird die Produktionsgeschwindigkeit in den Bereichen, wo das Gewirk eine geringe Komplexität aufweist erhöht, so dass insgesamt eine hohe mittlere Produktionsgeschwindigkeit erhalten wird.

Gemäß der Erfindung weist die Kettenwirkmaschine oder Raschelmaschine zur Herstellung des erfindungsgemäßen Flächenheizelements ein Magazinschusseintragssystem mit Zuführketten zur Zuführung von Schussfäden und einem Schusswagen zum Einlegen von Schussfäden auf, bei welchem sowohl die Zuführketten als auch der Schusswagen synchron abhängig von der Maschenbildung für vorgegebene Zeiten angehalten werden.

Damit kann auf überraschend einfache Weise der Ausschuss an teurem leitenden Material, aus welchem die Kontaktleiter bestehen, erheblich reduziert werden.

Die Kontaktleiter werden nur lokal oder in einzelnen Gruppen in das Gewirk eingelegt, wobei die Kontaktleiter die einzelnen Flächenheizelemente, die aus dem Gewirk gewonnen werden begrenzen, das heißt die Abstände zwischen diesen Kontaktleitern sind relativ groß.

Um die Kontaktleiter lokal in das Gewirk einzulegen, wird der Schusswagen nicht kontinuierlich bewegt, sondern für vorgegebene Haltezeiten angehalten. Würde nur der Schusswagen angehalten und die Zuführkette weiterlaufen, so würde die die Kontaktleiter bildenden Schussfäden auf den Zuführketten weitergefördert. Damit entstünde an den Rändern des Gewirks jeweils ein Randsaum von Schussfäden, die bei dem Zuschneiden des Gewirks zu einzelnen Flächenheizelementen als Ausschuss anfallen würden. Dadurch, dass erfindungsgemäß nicht der Schusswagen sondern auch die Zuführkette synchron für die vorgegebenen Haltezeiten angehalten werden, wird dieser Ausschuss von Schussfäden vollständig vermieden.

Das erfindungsgemäße Magazinschusseintragssystem mit einer Steuereinheit, mittels derer während des Wirkprozesses des Gewirks sowohl der Schusswagen als auch die Zuführkette abhängig von der Maschenbildung des Gewirks für vorgegebene Zeiten angehalten werden, kann allgemein für Kettenwirkmaschinen, insbesondere Raschelmaschinen eingesetzt werden. Besonders vorteilhaft wird das erfindungsgemäße Magazinschusseintragssystem dann eingesetzt, wenn teure Schussfäden eingesetzt werden, bei welchen ein anfallender Ausschuss erhebliche Kosten verursachen würden.

Auch die erfindungsgemäße Variation der Produktionsgeschwindigkeit abhängig von der Maschenbildung des Gewirks kann allgemein für Kettenwirkmaschine insbesondere Raschelmaschine eingesetzt werden, wobei hier ebenfalls eine geeignete Steuereinheit vorgesehen ist.

Vorteilhaft erfolgt die Steuerung der Produktionsgeschwindigkeit oder auch die Steuerung der Haltezeiten der Zuführketten und des Schusswagens des Magazinschusseintragssystems gemäß dem erfindungsgemäßen Verfahren über eine Impuls-Steuerung. Die Impuls-Steuerung erhält von geeigneten Maschinenelementen, die zur Maschenbildung des Gewirks verwendet werden eine Impulsfolge im Takt der Maschenbildung, anhand derer in der Steuereinheit die Produktionsgeschwindigkeit und/oder die Haltezeiten ohne weitere Sensorik vorgegeben werden. Vorteilhaft ist in der Steuereinheit eine parametrierbare Software vorgesehen, so dass die Variation der Produktionsgeschwindigkeit oder der Haltezeiten des Schusswagens und der Zuführkette applikationsspezifisch optioniert werden können.

Prinzipiell kann das mit dem erfindungsgemäßen Verfahren hergestellte Flächenheizelement allein aus dem von den Fransenmaschen gebildeten Gewirk mit den dort eingelegten Heizleitern und Kontaktleitern bestehen, wobei die Heizleiter und Kontaktleiter generell aus leitfähigen Materialien, wie zum Beispiel Carbon, bestehen.

Gemäß einer alternativen Ausgestaltung wird ein Grundmaterial, insbesondere ein Vlies, verwendet, welches vom Gewirk durchstochen wird.

Dabei werden durch die Fransenmaschen die Heizleiter und Kontaktleiter mit dem Grundmaterial verbunden und lagegesichert.

In beiden Fällen sind die Heizleiter und die Kontaktleiter so im Gewirk gelegt, dass sich diese an Kontaktstellen berühren, so dass ein leitender Kontakt zwischen diesen vorhanden ist und damit eine Stromzuführung über die Kontaktleiter zu den Heizleitern gegeben ist.

Gemäß einer besonders vorteilhaften Weiterbildung bilden die Heizleiter Maschen aus, welche die Kontaktleiter umschlingen.

Dadurch wird der Kontakt der Heizleiter und der Kontaktleiter noch weiter verbessert.

Insbesondere dann, wenn die Heizleiter keine die Kontaktleiter umschlingenden Maschen ausbilden, kann je nach Anordnung der Kontaktleiter deren Kontakt zu den Heizleitern reduziert sein. Dies ist insbesondere dann der Fall, wenn ein Flächenheizelement durch eine Gruppe von Kontaktleitern begrenzt wird. Dann kann oft der letzte Kontaktleiter einen reduzierten elektrischen Kontakt zu dem Heizleiter aufweisen, so dass dort bei der Stromzuführung eine große Wärmeentwicklung auftritt. Dies führt zu einer unerwünschten Begrenzung der Heizleistung.

Dieser unerwünschte Effekt kann auf überraschend einfache Weise dadurch vermieden werden, dass in diesem Bereich zusätzlich als Schussfaden ein aus nicht leitfähigem Material bestehender Isolatorfaden eingelegt wird, der gegen den Kontaktleiter drückt.

Gemäß einer vorteilhaften Ausgestaltung der Erfindung werden zur Ausbildung des Gewirks Fransenmaschen mittels einer ersten Legebarre gebildet und zum Legen der Heizleiter in Form von Kettfäden zwei Legebarren verwendet.

Durch den Einsatz zweier Legebarren für die Legung der Heizleiter im Gewirk können in variabler Weise Muster von Heizleitern im Gewirk erzeugt werden. Insbesondere können zwei dimensionale vernetzte Muster von Heizleitern erzeugt werden, die zu hohen Heizleistungen des Flächenheizelements führen.

Besonders vorteilhaft werden mit den beiden Legebarren unterschiedliche Versätze, der Heizleiter quer zur Laufrichtung der Zuführkette erzeugt.

Dabei betragen die Versätze bis zu +/- 1,5 Zoll bezogen auf eine Nulllinie.

Die so erzeugten Versätze bilden lange Segmente der Heizleiter aus, die an den Kontaktleitern anliegen, wodurch der elektrische Kontakt der Heizleiter mit den Kontaktleitern weiter verbessert wird.

Je größer die Versätze der Heizleiter sind, desto komplexer ist der Wirkvorgang. Da die Versätze ortsabhängig variieren, ist dementsprechend der Grund der Komplexität des Wirkvorgangs über die Länge des Gewirks ebenfalls positionsabhängig. Erfindungsgemäß wird dieser Positionsabhängigkeit dadurch Rechnung getragen, dass in Bereichen großer Versätze der Heizleiter die Produktionsgeschwindigkeit gegenüber Bereichen mit geringen Versätzen der Heizleiter reduziert ist, wodurch eine Optimierung, das heißt Maximierung der Produktionsgeschwindigkeit erzielt wird.

Die mit dem erfindungsgemäßen Verfahren hergestellten Flächenheizelemente können besonders vorteilhaft in Kraftfahrzeugen eingesetzt werden. Dabei können die Flächenheizelemente zur Ausbildung von Lenkradheizungen verwendet werden. Zudem können die Flächenheizelemente in Wandverkleidungen von Kraftfahrzeugen eingebaut werden um deren Innenräume zu beheizen, was insbesondere bei Kraftfahrzeugen mit Elektroantrieben vorteilhaft ist.

Besonders vorteilhaft werden die Flächenheizelemente zur Herstellung von Sitzheizungen von Kraftfahrzeugen verwendet. Die Sitze von Kraftfahrzeugen weisen generell eine obere Deckschicht auf, deren Oberseite die Sitzfläche für eine den Sitz nutzende Person bildet. Die Deckschicht kann aus Leder oder Stoff bestehen. Unterhalb der Deckschicht befindet sich dann eine weichere Komfortschicht, die zur Polsterung des Sitzes dient.

Da das Flächenheizelement ein weiches, nachgiebiges Gewirk ist, kann dieses direkt unterhalb der Deckschicht angebracht werden, ohne dass dadurch der Sitzkomfort beeinträchtigt wird. Dies stellt einen wesentlichen Vorteil gegenüber bekannten, herkömmlichen Flächenheizelementen dar, die erheblich starrer und unnachgiebiger als das erfindungsgemäße Flächenheizelement sind und deshalb nicht direkt unter der Deckschicht sondern unter der Komfortschicht eingebaut werden müssen. Dadurch wird mit dem erfindungsgemäßen Flächenheizelement ein erheblicher Energieeinsparungseffekt erzielt, da nunmehr mit dem Flächenheizelement nur noch die Deckschicht aber nicht mehr die Komfortschicht des Sitzes eines Kraftfahrzeugs aufgeheizt werden muss.

Gemäß einer vorteilhaften Variante kann das Flächenheizelement als Grundmaterial ein Vlies oder einen ähnlich weichen Stoff aufweisen. Dann kann das Flächenheizelement selbst die Komfortschicht bilden, wodurch eine separate Schicht zur Ausbildung der Komfortschicht eingespart werden kann.

In weiteren vorteilhaften Verwendungen kann das Flächenheizelement als Wand- oder Bodenheizung in einem Gebäude oder auch als Heiztapete eingesetzt werden. Weiterhin können die Flächenheizelemente in Bekleidungsstücken integriert werden.

Die Erfindung wird im Folgenden anhand der Zeichnungen erläutert. Es zeigen:
- Figur 1:: Schematische Darstellung von Komponenten einer Raschelmaschine zur Herstellung des erfindungsgemäßen Flächenheizelements.
- Figur 2:: Schematische Darstellung eines Magazinschusseintragssystems für die Raschelmaschine gemäß Figur 1.
- Figur 3:: Beispiel eines mit der Raschelmaschine gemäß Figur 1 hergestellten Flächenheizelements.
- Figur 4:: Schematische Darstellung einer ersten Struktur von Kontaktleitern und Heizleitern für das Flächenheizelement.
- Figur 5:: Schematische Darstellung einer zweiten Struktur von Kontaktleitern und Heizleitern für das Flächenheizelement.
- Figur 6:: Schematische Darstellung einer dritten Struktur von Kontaktleitern und Heizleitern für das Flächenheizelement.

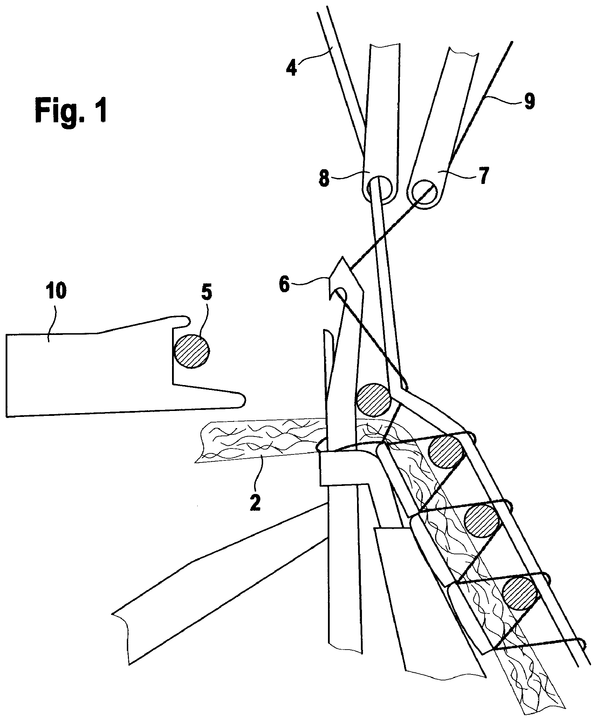

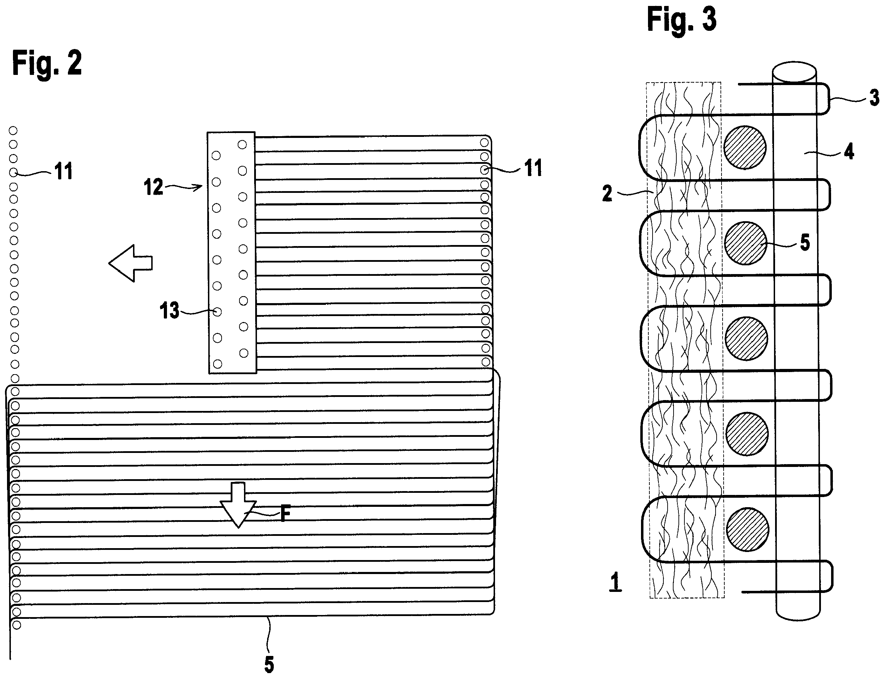

Figur 1 zeigt schematisch Komponenten einer Raschelmaschine zur Herstellung des Flächenheizelements 1, wobei die Raschelmaschine im vorliegenden Fall als Vlies-Raschelmaschine ausgebildet ist. Figur 2 zeigt für die Raschelmaschine gemäß Figur 1 ein Magazinschusseintragssystem.

Mit dieser Raschelmaschine wird ein Flächenheizelement 1 wie in Figur 3 derart hergestellt, dass in ein Grundmaterial, welches im vorliegenden Fall von einem Vlies 2 gebildet ist, von einem Gewirk durchstochen wird, welches von Fransenmaschen 3 gebildet ist. Die Fransenmaschen 3 bestehen aus elektrisch nicht leitfähigen Materialien. In dieses Gewirk sind als Kettfäden Heizleiter 4 eingelegt. Weiterhin sind als Schussfäden Kontaktleiter 5 eingelegt, welche als Stromzuführungen für die Heizleiter 4 dienen. Die Heizleiter 4 und die Kontaktleiter 5 bestehen aus elektrisch leitendem Material, insbesondere aus Carbon oder auch aus einem metallischen Werkstoff.

Zur Herstellung dieses Gewirks sind, wie Figur 1 zeigt, einer Nadel 6 unterschiedliche Typen von Lochnadeln 7, 8 zweier Legebarren zugeordnet, wobei in der ersten Lochnadel 7 der Faden 9 zur Ausbildung der Fransenmaschen 3 und in der zweiten Lochnadel 8 der Heizleiter 4 geführt wird. Generell kann diese Vorrichtung auch derart erweitert sein, dass zwei Legebarren zur Führung zweier Heizleiter 4 aufweist.

Weiterhin ist in Figur 1 ein Schieber 10 als Bestandteil eines Magazinschusseintragssystems dargestellt, mit welchem der Kontaktleiter 5 in das Gewirk eingelegt wird.

Das Magazinschusseintragssystem, das schematisch in Figur 2 dargestellt ist, weist zwei parallel laufende Zuführketten 11 auf, an welchen Haken zur Aufnahme der Kontaktleiter 5 vorgesehen sind und welche jeweils mit einer Fördergeschwindigkeit umlaufen. Weiterhin weist das Magazinschusseintragssystem einen orthogonal zur Förderrichtung F der Zuführkette 11 verlaufenden Schusswagen 12 mit Ösen 13, in welche die Kontaktleiter 5 eingebracht werden können auf. Mit dem Schusswagen 12 wird der in Figur 1 dargestellte Schieber 10 betätigt. Zum Einlegen von Kontaktleitern 5 als Schussfäden in das Gewirk übernimmt der Schusswagen 12 die Kontaktleiter 5 von den Zuführketten 11, wie in Figur 2 veranschaulicht.

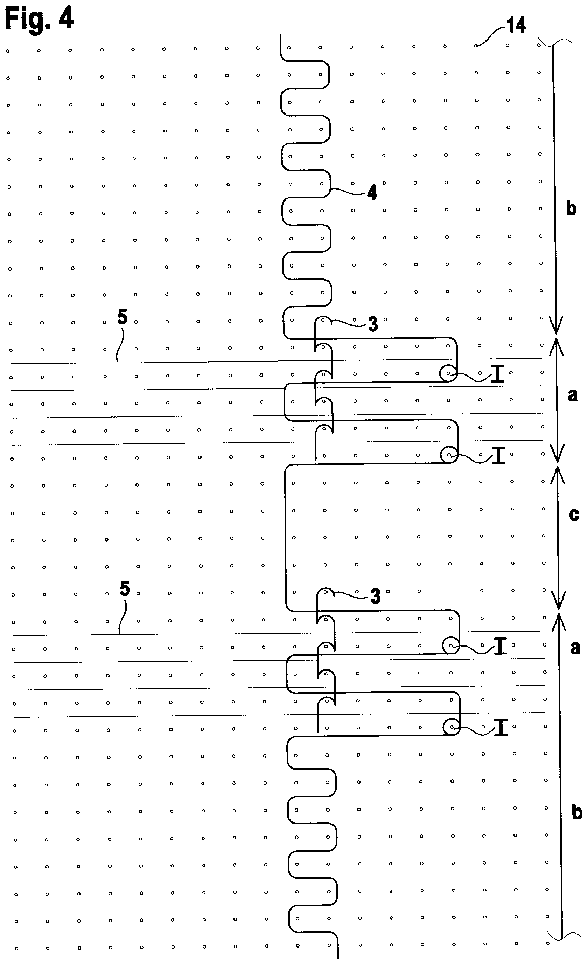

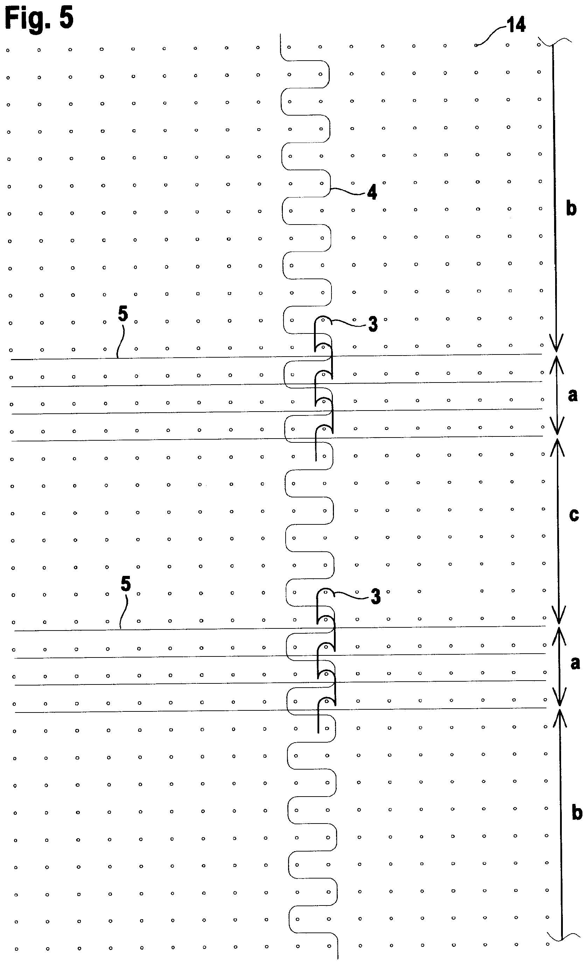

Mit dem Magazinschusseintragssystem werden Kontaktleiter 5 nur lokal in das Gewirk eingelegt und bilden dabei die Begrenzungen eines Flächenheizelements 1. Dies ist in den Figuren 4 und 5 veranschaulicht. Dort sind die Bereiche des Flächenheizelements 1, die einen Heizbereich des Flächenheizelements 1 ausbilden, mit b bezeichnet. Die die Begrenzungen des Flächenheizelements 1 ausbildenden Bereiche mit den Kontaktleitern 5 sind mit a bezeichnet. Zwischen benachbarten Bereichen a mit Kontaktleitern 5 befindet sich ein mit c bezeichneter Schnittbereich. Dort wird das Gewirk mit dem Vlies 2 nach dem Herstellprozess auf der Raschelmaschine auseinandergeschnitten, wodurch dann mehrere getrennte Flächenheizelemente 1 erhalten werden.

Da die Kontaktleiter 5 nur in diskreten Bereichen in das Gewirk eingelegt werden, wird der Schusswagen 12 dann, wenn keine Kontaktleiter 5 eingelegt werden, angehalten. Erfindungsgemäß werden mit dem Schusswagen 12 auch die Zuführketten 11 angehalten. Damit wird verhindert, dass durch ein Weiterlaufen der Zuführkette 11 überschüssiges Material der Kontaktleiter 5 in die Randbereiche des Gewirks eingearbeitet wird, dass nach dem Herstellungsprozess des Flächenheizelements 1 als Ausschuss anfällt.

Die Steuerung der Haltezeiten des Schusswagens 12 und der Zuführkette 11 erfolgt über eine nicht dargestellte Steuereinheit. In der Steuereinheit ist eine parametrierbare Software für eine Impuls-Steuerung implementiert, die abhängig von der Maschenbildung die Haltezeiten steuert.

Weiterhin erfolgt in der Steuereinheit auch eine Steuerung der Produktionsgeschwindigkeit der Raschelmaschine, wobei auch diese Steuerung abhängig von der Maschenbildung erfolgt. Die Steuerung erfolgt dabei generell derart, dass in Bereichen, wo das Maschenbild des Gewirks komplex ist und daher eine höhere Bearbeitungszeit erfordert, die Produktionsgeschwindigkeit kleiner gewählt wird als in Bereichen geringerer Komplexität. Durch diese Anpassung der Produktionsgeschwindigkeit an die ortsabhängig variierende Komplexität der Struktur des Gewirks kann die Produktionsgeschwindigkeit maximiert werden.

Die erfindungsgemäße Variation der Produktionsgeschwindigkeit wird im Folgenden anhand der Figuren 4 und 5 erläutert. Dort sind in einem Raster die Nadelpositionen 14 zur Herstellung des Gewirks dargestellt, dessen Fransenmaschen 3 aus Gründen der Übersichtlichkeit nur lokal dargestellt sind, sich jedoch über das gesamte Raster erstrecken.

Bei dem Ausführungsbeispiel gemäß Figur 4 sind in den die Heizflächen bildenden Bereiche die Heizleiter 4 mit einem Versatz von zwei Nadelpositionen 14 ausgebildet, das heißt die Heizleiter 4 verlaufen dort nicht längs einer Geraden senkrecht zu den Kontaktleitern 5 sondern entlang einer rechteckigen ZickZack-Linie. Dabei zeigt Figur 4 aus Gründen der Übersichtlichkeit nur einen Heizleiter 4. Natürlich sind in das Gewirk mehrere Heizleiter 4 eingebracht.

In dem Schnittbereich c, der später als Ausschuss anfällt, verläuft der Heizleiter 4 geradlinig, so dass in diesem Bereich nur wenig Heizleiter-Material benötigt wird.

In den Bereichen a mit den Kontaktleitern 5 weist der Heizleiter 4 einen größeren, sich über sechs Nadelpositionen 14 erstreckenden Versatz auf. Dadurch liegt der Heizleiter 4 über einen großen Bereich an dem Kontaktleiter 5 an und sorgt somit für einen guten elektrischen Kontakt zwischen dem Heizleiter 4 und den Kontaktleitern 5. Dieser Kontakt wird dadurch noch weiter verbessert, dass der Heizleiter 4 im Bereich a Maschen (in Figur 4 mit I bezeichnet) bildet, die sich um einen Kontaktleiter 5 legen.

Wie aus der Darstellung von Figur 4 unmittelbar ersichtlich, weist die Gewirkstruktur in den Bereichen a die höchste und in den Bereichen c die geringste Komplexität auf. Demzufolge erfolgt die Steuerung der Produktionsgeschwindigkeit derart, dass die Produktionsgeschwindigkeit in den Bereichen c am höchsten und in den Bereichen a am geringsten ist, wogegen in den Bereichen b die Produktionsgeschwindigkeit auf einen dazwischen liegenden, mittleren Wert eingestellt ist.

Bei der Ausführungsform gemäß Figur 5 verläuft der Heizleiter 4 mit einem konstanten Versatz über alle Bereiche a, b, c. In diesem Fall kann die Produktionsgeschwindigkeit konstant gewählt sein.

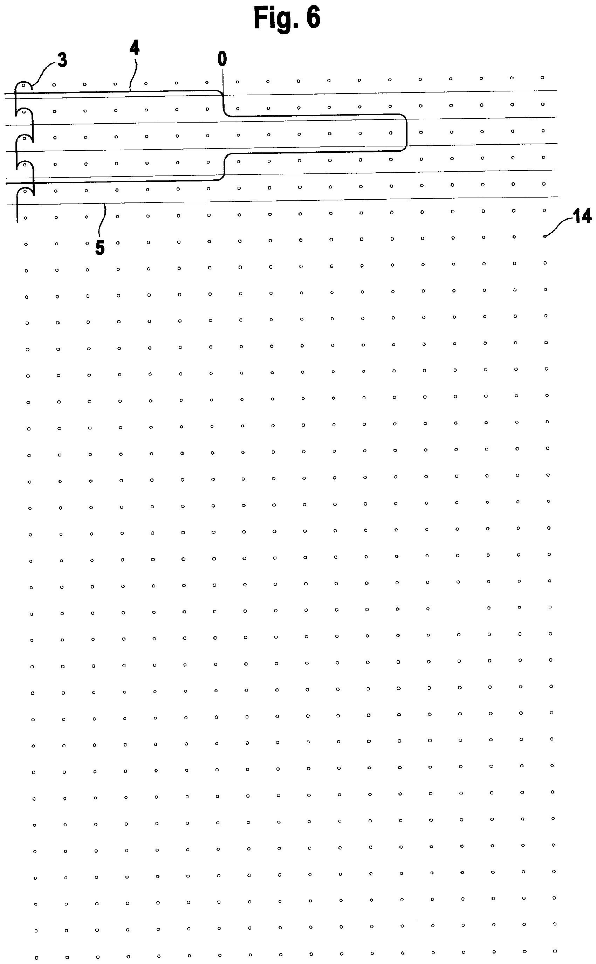

Figur 6 zeigt schematisch einen im Bereich der Kontaktleiter 5 verlaufenden Heizleiter 4, der bezogen auf eine Nulllinie 0 einen Versatz +/- 1,5 Zoll in beiden Richtungen aufweist. Dieser Versatz lässt sich mit zwei separaten Legebarren für die Heizleiter 4 herstellen. In diesem Fall werden besonders große Kontaktflächen zwischen Heizleiter 4 und Kontaktleiter 5 und damit eine entsprechend gute elektrische Kontaktierung erhalten.

### Bezugszeichenliste

- (1): Flächenheizelement
- (2): Vlies
- (3): Fransenmaschen
- (4): Heizleiter
- (5): Kontaktleiter
- (6): Nadel
- (7): Lochnadel
- (8): Lochnadel
- (9): Faden
- (10): Schieber
- (11): Zuführkette
- (12): Schusswagen
- (13): Öse
- (14): Nadelposition
- (F): Förderrichtung

## Patentansprüche

1. Verfahren zum Herstellen eines textilen Flächenheizelements (1), wobei ein Gewirk gebildet wird und in ein- und demselben Arbeitsvorgang durch Wirken die Heizleiter (4) als Kettfäden gelegt werden, und wobei in Abständen zueinander als Schussfäden oder Schussfadengruppen die Heizleiter (4) berührende Kontaktleiter (5) eingetragen werden, wobei zur Herstellung des Flächenheizelements (1) eine Kettenwirkmaschine oder Raschelmaschine eingesetzt wird, die ein Magazinschusseintragssystem mit Zuführketten (11) zur Zuführung von Schussfäden und einem Schusswagen (12) zum Einlegen von Schussfäden aufweist, **dadurch gekennzeichnet, dass** die Produktionsgeschwindigkeit der Kettenwirkmaschine oder Raschelmaschine abhängig von der Maschenbildung variiert wird, und dass sowohl die Zuführkette (11) als auch der Schusswagen (12) synchron abhängig von der Maschenbildung für vorgegebene Zeiten angehalten werden.

2. Verfahren nach Anspruch 1, **dadurch gekennzeichnet, dass** sowohl die Steuerung der Produktionsgeschwindigkeit als auch die Steuerung der Haltezeiten der Zuführketten (11) und des Schusswagens (12) jeweils mittels einer Impuls-Steuerung erfolgt.

3. Verfahren nach einem der Ansprüche 1 bis 2, **dadurch gekennzeichnet, dass** zur Ausbildung des Gewirks Fransenmaschen (3) mittels einer ersten Legebarre gebildet werden, und dass zum Legen der Heizleiter (4) in Form von Kettfäden zwei Legebarren verwendet werden.

4. Verfahren nach Anspruch 3, **dadurch gekennzeichnet, dass** mit den beiden Legebarren unterschiedliche Versätze der Heizleiter (4) quer zur Laufrichtung der Zuführketten (11) erzeugt werden.

5. Verfahren nach Anspruch 4, **dadurch gekennzeichnet, dass** die Versätze bis zu +/- 1,5 Zoll bezogen auf eine Nulllinie betragen.

6. Verfahren nach einem der Ansprüche 4 oder 5, **dadurch gekennzeichnet, dass** in Bereichen großer Versätze der Heizleiter (4) die Produktionsgeschwindigkeit gegenüber Bereichen mit geringen Versätzen der Heizleiter (4) reduziert ist.

7. Verfahren nach einem der Ansprüche 1 bis 6, **dadurch gekennzeichnet, dass** ein Grundmaterial, insbesondere ein Vlies (2), verwendet wird, welches vom Gewirk durchstochen wird.

8. Verfahren nach Anspruch 7, **dadurch gekennzeichnet, dass** durch die Fransenmaschen (3) die Heizleiter (4) und Kontaktleiter (5) mit dem Grundmaterial verbunden und lagegesichert werden.

9. Verfahren nach einem der Ansprüche 1 bis 8, **dadurch gekennzeichnet, dass** die Heizleiter (4) Maschen ausbilden, welche die Kontaktleiter (5) umschlingen.

10. Verfahren nach einem der Ansprüche 1 bis 9, **dadurch gekennzeichnet, dass** als zusätzliche Schussfäden Isolatorfäden in das Gewirk eingelegt werden.

11. Kettenwirkmaschine oder Raschelmaschine mit einem Magazinschusseintragssystem mit Zuführketten (11) zur Zuführung von Schussfäden und einem Schusswagen (12) zum Einlegen von Schussfäden in ein Gewirk, **dadurch gekennzeichnet, dass** eine Steuereinheit vorgesehen ist, mittels derer während des Wirkprozesses des Gewirks die Produktionsgeschwindigkeit der Kettenwirkmaschine oder Raschelmaschine abhängig von der Maschenbildung variiert wird und dass sowohl der Schusswagen (12) als auch die Zuführkette (11) synchron abhängig von der Maschenbildung des Gewirks für vorgegebene Zeiten angehalten werden.

12. Kettenwirkmaschine oder Raschelmaschine nach Anspruch 11, **dadurch gekennzeichnet, dass** die Steuereinheit eine Impuls-Steuereinheit ist.

13. Kettenwirkmaschine oder Raschelmaschine nach einem der Ansprüche 11 oder 12, **dadurch gekennzeichnet, dass** in der Steuereinheit eine parametrierbare Software vorgesehen ist.

## Claims

1. Method of producing a textile flat heating element (1), in which a knitted material is formed and the heat conductors (4) are laid as warp threads in one and the same working process by knitting, wherein the contact lines (5) contacting the heat conductors (4) are incorporated at mutual spacings as weft threads or weft thread groups and wherein a warp knitting machine or Raschel machine, which comprises a magazine weft intake system with feed chains (11) for the feed of weft threads and a weft carriage (12) for insertion of weft threads, is used for producing the flat heating element (1), **characterised in that** the production rate of the warp knitting machine or Raschel machine is varied in dependence on the mesh formation and that not only the feed chain (11), but also the weft carriage (12) are synchronously stopped for predetermined times depending on the mesh formation.

2. Method according to claim 1, **characterised in that** not only the control of the production rate, but also the control of the stop times of the feed chains (11) and the weft carriage (12) are each carried out by means of pulse control.

3. Method according to one of claims 1 and 2, **characterised in that** fringe meshes (3) are formed by means of a first guide bar in order to form the knitted material and that two guide bars are used for laying the heat conductors (4) in the form of warp threads.

4. Method according to claim 3, **characterised in that** different offsets of the heat conductors (4) transversely to the running direction of the feed chains (11) are produced by means of the two guide bars.

5. Method according to claim 4, **characterised in that** the offsets are up to +/- 1.5 inches referred to a zero line.

6. Method according to one of claims 4 and 5, **characterised in that** the production rate is reduced in regions of greater offsets of the heat conductors (4) by comparison with regions with small offsets of the heat conductors (4).

7. Method according to any one of claims 1 to 6, **characterised in that** a base material, particularly a non-woven material (2), which is penetrated by the knitted material, is used.

8. Method according to claim 7, **characterised in that** the heat conductors (4) and contact lines are connected with the base material and secured in position by the fringe meshes (3).

9. Method according to any one of claims 1 to 8, **characterised in that** the heat conductors (4) form meshes which loop around the contact lines (5).

10. Method according to any one of claims 1 to 9, **characterised in that** insulator threads as additional weft threads are inserted into the knitted material.

11. Warp knitting machine or Raschel machine with a magazine weft intake system, with feed chains (11) for the feed of weft threads and a weft carriage (12) for insertion of weft threads into a knitted material, **characterised in that** a control unit by means of which the production rate of the warp knitting machine or Raschel machine is varied in dependence on the mesh formation during the knitting process of the knitted material is provided and that not only the weft carriage (12), but also the feed chain (11) are stopped synchronously for predetermined times depending on the mesh formation of the fabric.

12. Warp knitting machine or Raschel machine according to claim 11, **characterised in that** the control unit is a pulse control unit.

13. Warp knitting machine or Raschel machine according to one of claims 11 and 12, **characterised in that** parameterisable software is provided in the control unit.

## Revendications

1. Procédé de fabrication d'un élément chauffant textile aplati (1), dans lequel un tricot est formé et les conducteurs chauffants (4) sont positionnés en tant que fils de chaîne, par tricotage en une seule et même opération, et dans lequel des conducteurs de contact (5), touchant lesdits conducteurs chauffants (4), sont intégrés avec espacements mutuels, en tant que fils de trame ou groupes de fils de trame, un métier de tricotage chaîne ou métier Rachel, utilisé pour la fabrication dudit élément chauffant aplati (1), comprenant un système d'insertion de trame de magasin, équipé de chaînes d'alimentation (11) affectées à la délivrance de fils de trame, et d'un chariot de trame (12) dévolu à l'insertion de fils de trame, **caractérisé par le fait que** la vitesse de production du métier de tricotage chaîne, ou métier Rachel, est modifiée en fonction de la formation des mailles ; et **par le fait qu'**aussi bien la chaîne d'alimentation (11), que le chariot de trame (12), sont immobilisés de manière synchrone pour des temps préétablis, en fonction de la formation des mailles.

2. Procédé selon la revendication 1, **caractérisé par le fait qu'**aussi bien la commande de la vitesse de production, que la commande des temps d'immobilisation des chaînes d'alimentation (11) et du chariot de trame (12), sont respectivement effectuées au moyen d'une commande par impulsions.

3. Procédé selon l'une des revendications 1 à 2, **caractérisé par le fait que** des mailles de franges (3) sont formées au moyen d'une première barre d'insertion, en vue de constituer le tricot ; et **par le fait que** deux barres d'insertion sont utilisées pour le positionnement des conducteurs chauffants (4) sous la forme de fils de chaîne.

4. Procédé selon la revendication 3, **caractérisé par le fait que** différents décalages des conducteurs chauffants (4) sont engendrés à l'aide des deux barres d'insertion, transversalement par rapport à la direction de défilement des chaînes d'alimentation (11).

5. Procédé selon la revendication 4, **caractérisé par le fait que** les décalages mesurent jusqu'à +/- 1,5 pouce anglo-saxon par rapport à une ligne zéro.

6. Procédé selon l'une des revendications 4 ou 5, **caractérisé par le fait que** la vitesse de production est réduite, dans des régions à forts décalages des conducteurs chauffants (4), vis-à-vis de régions à faibles décalages desdits conducteurs chauffants (4).

7. Procédé selon l'une des revendications 1 à 6, **caractérisé par** l'utilisation d'un matériau de base, en particulier d'un non-tissé (2) transpercé par le tricot.

8. Procédé selon la revendication 7, **caractérisé par le fait que** les conducteurs chauffants (4) et les conducteurs de contact (5) sont reliés au matériau de base, et bloqués à demeure, par l'intermédiaire des mailles de franges (3).

9. Procédé selon l'une des revendications 1 à 8, **caractérisé par le fait que** les conducteurs chauffants (4) donnent naissance à des mailles qui enlacent les conducteurs de contact (5).

10. Procédé selon l'une des revendications 1 à 9, **caractérisé par le fait que** des fils isolants sont intégrés dans le tricot en tant que fils de trame additionnels.

11. Métier de tricotage chaîne, ou métier Rachel, comportant un système d'insertion de trame de magasin qui est équipé de chaînes d'alimentation (11) affectées à la délivrance de fils de trame, et d'un chariot de trame (12) dévolu à l'insertion de fils de trame dans un tricot, **caractérisé par** la présence d'une unité de commande au moyen de laquelle la vitesse de production dudit métier de tricotage chaîne, ou métier Rachel, est modifiée au cours du processus de tricotage du tricot, en fonction de la formation des mailles ; et par le fait qu'aussi bien le chariot de trame (12), que la chaîne d'alimentation (11), sont immobilisés de manière synchrone pour des temps préétablis, en fonction de la formation des mailles dudit tricot.

12. Métier de tricotage chaîne ou métier Rachel selon la revendication 11, **caractérisé par le fait que** l'unité de commande est une unité de commande par impulsions.

13. Métier de tricotage chaîne ou métier Rachel selon l'une des revendications 11 ou 12, **caractérisé par le fait qu'**un logiciel paramétrable est prévu dans l'unité de commande.
